# EUROPEAN PATENT SPECIFICATION

(11) **EP 4 458 616 B1**
(45) Date of publication and mention of the grant of the patent: **01.04.2026**
(21) Application number: 22914873.9
(22) Date of filing: 28.12.2022
(51) Int. Cl.: B60R 16/023, H02G 3/08

(54) **POWER DISTRIBUTION UNIT CAPABLE OF BEING MULTIDIRECTIONALLY MATCHED AND MOUNTED, SYSTEM, AND ELECTRIC VEHICLE**
ENERGIEVERTEILUNGSEINHEIT MIT FUNKTION ZUR MULTIDIREKTIONALEN ANPASSUNG UND MONTAGE, SYSTEM UND ELEKTROFAHRZEUG
UNITÉ DE DISTRIBUTION D'ÉNERGIE POUVANT ÊTRE MISE EN CORRESPONDANCE ET MONTÉE DE MANIÈRE MULTIDIRECTIONNELLE, SYSTÈME ET VÉHICULE ÉLECTRIQUE

(30) Priority: 28.12.2021 CN 202111623968
(43) Date of publication of application: 06.11.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2022/142648
(87) International publication number: WO 2023/125621

(56) References cited:
- CN-A- 104 477 114
- CN-A- 106 627 157
- CN-A- 107 650 836
- CN-A- 114 248 711
- CN-U- 208 291 145
- CN-U- 209 448 284
- KR-B1- 102 139 572
- US-A1- 2021 213 897

## Description

### RELATED APPLICATION

The present disclosure claims the priority of the Chinese patent with an application number of 202111623968.6, an invention title of "power distribution unit capable of being multidirectionally matched and mounted, system and electric vehicle", and filed on December 28, 2021.

### TECHNICAL FIELD

The present disclosure relates to the technical field of electric vehicles, and particularly to a power distribution unit capable of being multidirectionally matched and mounted, a system and an electric vehicle.

### BACKGROUND

The Power Distribution Unit (PDU) is an indispensable part of an electric vehicle, and can provide suitable power distribution schemes for different high-voltage electrical appliances. The cost is high since a metal housing is used. According to the general layout requirement, related high-voltage components (i.e., high-voltage electrical appliances) are arranged in different positions on various platforms. Usually, under the condition that the capacity of PDU meets the requirements, due to different arrangements of the high-voltage electrical appliances, the high-voltage plug-in connectors on the PDU have different orientations, resulting in that the PDU cannot be well shared in different platforms and configuration vehicle parts, so that the PDU cannot be platformized, and different PDUs need to be re-developed for different environments, thereby increasing the development cost.

The power distribution unit capable of being multidirectionally matched and mounted, system and electric vehicle is known in the prior art, e.g, from US 2021/213897 A1.

### SUMMARY

In view of the above problems in the prior art, the present disclosure aims to provide a power distribution unit capable of being multidirectionally matched and mounted, a system and an electric vehicle, which can improve the adaptability of the power distribution unit and reduce the development cost.

In order to solve the above technical problems, the specific technical solutions of the present disclosure are as follows:
In an aspect, the present disclosure provides a power distribution unit capable of being multidirectionally matched and mounted, comprising a housing and at least one electric control device;
the housing includes a plurality of connection end surfaces each provided with at least one electrical appliance interface;
the housing is further provided with a plug-in connector and a power interface; and
the electric control device is disposed inside the housing and connected to one of the electrical appliance interfaces; the electric control device is connected to an external power source through the power interface and is in communication connection with an external controller through the plug-in connector, so as to supply power to an electrical appliance connected to the electrical appliance interface according to a control instruction from the external controller.

In another aspect, the present disclosure further provides a system, which is a power distribution system, comprising a power end, a control end, an electrical appliance and the power distribution unit capable of being multidirectionally matched and mounted described above;
the power end is connected to the power distribution unit and configured to supply power to the electrical appliance connected to the power distribution unit; and
the control end is connected to the power distribution unit and configured to distribute electric energy to the electrical appliance connected to the power distribution unit.

Finally, the present disclosure further provides an electric vehicle, comprising the power distribution unit capable of being multidirectionally matched and mounted described above.

By adopting the above technical solutions, in the power distribution unit capable of being multidirectionally matched and mounted, the system and the electric vehicle of the present disclosure, the power distribution unit includes a housing and at least one electric control device; the housing includes a plurality of connection end surfaces each provided with at least one electrical appliance interface; the housing is further provided with a plug-in connector and a power interface; the electric control device is disposed inside the housing and connected to one of the electrical appliance interfaces; the electric control device is connected to an external power source through the power interface and is in communication connection with an external controller through the plug-in connector, so as to supply power to an electrical appliance connected to the electrical appliance interface according to a control instruction from the external controller. By providing the power distribution unit capable of being multidirectionally matched and mounted, the present disclosure enhances the platformization attribute of the power distribution unit, improves the adaptability of the power distribution unit in different platforms, and saves the design and manufacturing cost.

In order that the above and other pruposes, features and advantages of the present disclosure can be more readily understood, examplary embodiments are described in detail below with reference to the drawings.

### BRIEF DESCRIPTION OF THE DRAWINGS

In order to more clearly explain the technical solutions in the embodiments of the present disclosure or the prior art, the drawings to be used in the description of the embodiments or the prior art will be briefly introduced as follows. Obviously, the drawings used in the following description only illustrate some embodiments of the present disclosure, and those of ordinary skill in the art can obtain other drawings from them without paying any creative labor.
FIG. 1 illustrates a structural diagram of a power distribution unit capable of being multidirectionally matched and mounted according to an embodiment of the present disclosure;
FIG. 2 illustrates a cross-sectional view taken along line A-A in FIG. 1;
FIG. 3 illustrates a cross-sectional view taken along line B-B in FIG. 1; and
FIG. 4 illustrates a structural diagram of a connection end surface according to an embodiment of the present disclosure.

### DETAILED DESCRIPTION OF THE EXAMPLARY EMBODIMENTS

The technical solutions in the embodiments of the present disclosure will be clearly and completely described below with reference to the drawings for the embodiments of the present disclosure. Obviously, those described are merely a part, rather than all, of the embodiments of the present disclosure. Based on the embodiments of the present disclosure, any other embodiment obtained by those of ordinary skill in the art without paying any creative labor should fall within the protection scope of the present disclosure.

It should be noted that in the Description, claims and the above drawings of the present disclosure, the terms such as 'first' and 'second' are used to distinguish similar objects, and are not necessarily used to describe a specific sequence or precedence order. It should be understood that data used in this way can be interchanged under appropriate circumstances, for the convenience of describing the embodiments of the present disclosure. In addition, the terms 'comprise/include' and 'have' and any variation thereof are intended to cover non-exclusive inclusion. For example, any process, method, system, product or device that includes a series of steps or units is not necessarily limited to those steps or units that are clearly listed, but may include other steps or units that are not clearly listed or inherent to such process, method, product or device.

As a conventional power distribution device in the field of electric vehicles, the Power Distribution Unit (PDU) can provide suitable power distribution schemes for different high-voltage appliances. In the field of electric vehicles, the power distribution unit may be called as a high-voltage distribution box. Since different high-voltage appliances are arranged in different positions on the vehicle platform, it is necessary to configure PDUs with different orientations to meet the requirements of power distribution, which makes it difficult for the existing PDUs, which are unidirectionally matched and mounted, to adapt to different platforms, so that the PDUs cannot be platformized, and different PDUs need to be re-developed for different environments, thereby increasing the development cost.

In order to solve the above problems, the embodiments of the present disclosure provide a power distribution unit capable of being multidirectionally matched and mounted, which can realize the matching of electrical appliances in different directions, thereby improving the adaptability of the power distribution units and reducing the cost of developing and designing corresponding power distribution units for different platforms.

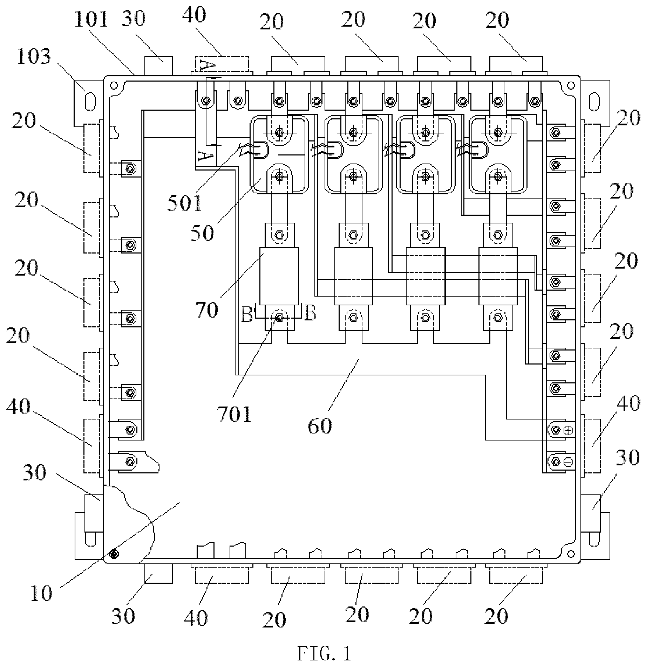

Specifically, referring to FIG. 1, the power distribution unit includes a housing 10 and at least one electric control device 50;
the housing 10 includes a plurality of connection end surfaces 101 each provided with at least one electrical appliance interface 20;
the housing 10 is further provided with a plug-in connector 30 and a power interface 40;
the electric control device 50 is disposed inside the housing 10 and are each connected to one of the electrical appliance interfaces 20; the electric control device 50 is connected to an external power source through the power interface 40 and is in communication connection with an external controller through the plug-in connector 30, so as to supply power to an electrical appliance connected to the electrical appliance interface 20 according to a control instruction from the external controller.

It can be understood that a plurality of connection end surfaces 101 are disposed on the housing 10 of the power distribution unit, so that the electric appliance can receive the distributed electric energy through the connection end surfaces 101, thereby realizing the multi-directional matching of the electric appliance, in which the connection end surfaces 101 may be designated surfaces of the housing 10 or all outer surfaces of the housing 10.

The housing 10 may be made of a metal material, which can ensure the strength and hardness of the housing 10 and avoid the deformation of the housing 10, thereby improving the safety of the devices inside the housing 10. In some other embodiments, the housing 10 may be made of an alloy material, such as an alloy material with a high strength and a low weight, thereby reducing the weight of the power distribution unit and improving the efficiency of replacement and assembly of devices.

The house 10 may be in a one-piece design, thereby improving the manufacturing efficiency of the housing 10 and reducing the manufacturing cost.

Each of the connection end surfaces 101 may be set into different shapes according to the actual situation, such as a square, a triangle, an irregular shape, etc., which is not limited in the embodiment of the present disclosure.

The housing 10 encloses the shape of the power distribution unit. The housing 10 may be a cuboid, which is convenient for mounting in the electric vehicle. By disposing the connection end surfaces 101 on different surfaces of the cuboid, the electrical appliance interfaces 20 may be disposed in different directions of the cuboid, thereby improving the adaptability of the power distribution unit.

In some embodiments of the present disclosure, there may be four connection end surfaces 101, and the electrical appliance interfaces 20 are disposed in four different directions of the power distribution unit, thereby realizing the adaptability of the power distribution units in different platforms.

The plug-in connector 30 may be a low-voltage plug-in connector in communication connection with an external controller, which is connected to the electric control device 50 inside the power distribution unit through the plug-in connector 30, so as to realize the control of the power supply output state for the electrical appliance interface 20 connected to the electric control device 50. For example, the low-voltage plug-in connector may be in communication connection with an internal control host of the electric vehicle. In the invention ow-voltage plug-in connector is in communication connection with any electrical control device 50, and different electrical control devices 50 are connected to different electrical appliance interfaces 20, so that different electrical control devices 50 can control the power utilization states of different electrical appliances, and the control host can control different electric control devices 50 to output different power supply states according to the actual situation.

In the embodiments of the invention, only one plug-in connector 30 is disposed in the housing 10, and the working states of all the electric control devices 50 inside the power distribution unit is controlled by the one plug-in connector 30, thereby realizing accurate power distribution. In some other embodiments, there may be a plurality of plug-in connectors 30, and for example, each of the connection end surfaces 101 may be provided with one plug-in connector 30, and different plug-in connectors 30 may control different electrical control devices 50 or combinations of the electrical control devices 50, thereby realizing independent control.

In some other embodiments, when the power distribution unit is provided with a plurality of plug-in connectors 30, one of the plug-in connectors 30 may be defined as a main plug-in connector and the others may be defined as standby plug-in connectors, and the main plug-in connector and the standby plug-in connector are connected in the same way to the interior of the power distribution unit. When the main plug-in connector is in normal working and the standby plug-in connectors are idle or inactive, the control of the electric control devices 50 inside the power distribution unit can be realized by the main plug-in connector. When the main plug-in connector fails, the standby plug-in connectors may be enabled, for example, one of the standby plug-in connectors may be selected as the main plug-in connector to continue to control the electric control device 50. By setting the standby plug-in connector, the service life of the power distribution unit can be improved, and the working reliability of the real-time power distribution unit can be improved.

During actual working, the power distribution unit is further provided with an electric control device control line 501, in which an interface of the plug-in connector 30 is connected to the electric control device 50 through the electric control device control line 501, and a control signal is sent to the electric control device 50 through the electric control device control line 501.

In the embodiments of the present disclosure, only one power interface 40 may be disposed in the housing 10, so that only one external power source can be connected, and all the electrical appliances connected to the power distribution unit can be powered by one external power source. In some other embodiments, there may be a plurality of power interfaces 40, and for example, each of the connection end surfaces 101 may be provided with one power interface 40, and different power interfaces 40 may be connected to different external power sources, so that different electrical appliance interfaces 20 or combinations thereof can be powered, and different power sources are available for for different electrical appliances or combinations thereof, thereby realizing the balanced distribution of the internal power sources of the electric vehicle.

In the embodiments of the present disclosure, each of the electrical appliance interfaces 20 is connected to at most one of the electrical control devices 50, and when not connected to the electrical control device 50, the electrical appliance interface 20 is connected to the power interface 40.

It can be understood that the electrical appliance interface 20 in the power distribution unit may be directly connected to the power interface 40, so that the external power source directly supplies power to the electrical appliance connected to the electrical appliance interface 20, which reduces the control lines of the intermediate electrical control device 50.

The electric control device 50 may be fixed inside the housing 10 by bolts. The fixed positions of different electric control devices 50 may be adapted according to the electrical appliance interfaces 20 to which electric control devices 50 are connected, and the specific fixed positions are not limited in the embodiments of the present disclosure.

In the embodiments of the present disclosure, the electrical appliance interface 20 is a high-voltage electrical appliance interface, and the power interface 40 is a high-voltage battery pack interface. The high-voltage electrical appliance may be a high-voltage electrical device inside the electric vehicle, such as an air-conditioning compressor, a PTC heater, etc., and the high-voltage battery pack may be a power battery of the electric vehicle.

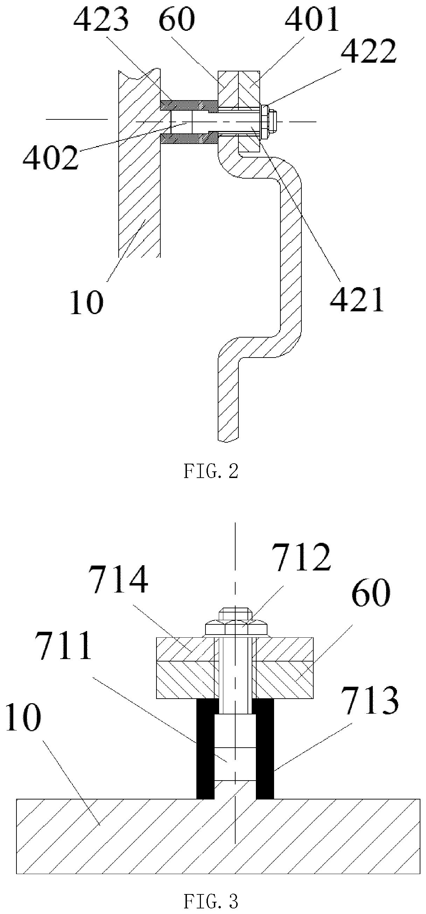

In the embodiments of the present disclosure, referring to FIG. 2, which illustrates a cross-sectional view taken along line A-A in FIG. 1, the power interface 40 includes a power copper bar 401 and a first connecting seat 402;
the first connecting seat 402 is fixed on the housing 10;
the power copper bar 401 is connected to the external power source; the power copper bar 401 is connected to the electrical control device 50 or the electrical appliance interface 20 through a connecting copper bar 60; the power copper bar 401 and the connecting copper bar 60 are superimposed and fixed on the first connecting seat 402 and keep a preset distance from the housing 10.

By disposing the power copper bar 401 and the connecting copper bar 60, the high-voltage transmission of electric energy can be realized, so as to transmit the high-voltage electric energy to a high-voltage electrical appliance, thereby ensuring the reliability and stability of the power distribution unit.

By keeping the positions of the power copper bar 401 and the connecting copper bar 60 at a preset distance from the housing 10, it is possible to realize the insulation environment between the copper bars (i.e., the power copper bar 401 and the connecting copper bar 60) and the housing 10, thereby avoiding the occurrence of high-voltage electrical connection and improving the safety and reliability of the power distribution unit. The preset distance may be a minimum insulation gap between the respective electrically conductive parts (i.e., the copper bars and the housing 10).

In the embodiments of the present disclosure, the first connecting seat 402 includes a first bolt 421, a first nut 422 and a first insulating seat 423;
the first bolt 421 is fixed at the bottom of the housing 10, and optionally, the first bolt 421 is welded at the bottom of the housing 10;
the first insulating seat 423 is sleeved on the first bolt 421, with one end of the first insulating seat 423 abuts against the housing 10, and the other end of the first insulating seat 423 forms a first supporting end surface (not illustrated in the figure) for mounting the power copper bar 401 and the connecting copper bar 60;
the first nut 422 is cooperated with the first bolt 421 and used to fix the power copper bar 401 and the connecting copper bar 60 on the first bolt 421.

It can be understood that in the present disclosure, the power interface 40 is disposed on the surface of the housing 10 by means of the first bolt 421 and the first nut 422, while the power interface 40 is connected to the devices inside the power distribution unit, thereby forming a high-voltage loop environment.

The power copper bar 401 is provided with a first mounting hole, and the connecting copper bar 60 is provided with a second mounting hole, and the first mounting hole corresponds to the second mounting hole;
the sizes of the first mounting hole and the second mounting hole are consistent with the cross section of the first bolt 421, and are both smaller than the size of the first supporting end surface.

It can be understood that by fixing the connecting copper bar 60 and the power copper bar 401 between the first nut 422 and the first supporting end surface, the stability of fixation can be improved, and the disassembly and assembly are facilitated. The structures of the power copper bar 401 and the connecting copper bar 60 are designed according to the actual situations, and for example, the power copper bar 401 may be plate-shaped and the connecting copper bar 60 may be bent.

In order to further improve the insulation effect of the power interface 40, the surfaces of the power copper bar 401 and the connecting copper bar 60 may be coated with a first insulating layer, and optionally, the first insulating layer may be a PVC insulating layer.

In fact, the power interface 40 may include a positive power interface and a negative power interface, which form a closed loop of the power source. Correspondingly, the positive power interface includes a positive power copper bar, a positive connecting copper bar and a positive first connecting seat; the negative power interface includes a negative power copper bar, a negative connecting copper bar and a negative first connection seat; and the specific connection relationships are consistent with those described above, which are not repeated in the embodiment of the present disclosure.

In the embodiments of the present disclosure, the power distribution unit further includes a fuse box 70, which is fixed on the housing 10 through a second connecting seat 701;
a power inlet end of the fuse box 70 is connected to the power interface 40 through a connecting copper bar 60, and a power outlet end of the fuse box 70 is connected to the electrical control device 50 or the electrical appliance interface 20.

It can be understood that the fuse box 70 is connected in series with a loop of the power interface 40 and the electrical control device 50 or a loop of the power interface 40 and the electrical appliance interface 20. When the current information in the connected loop meets a preset condition, the fuse box 70 may open the connected loop to avoid the danger occurred in the connected loop, thereby improving the reliability and safety of the power distribution unit.

The fuse box 70 may be connected to the electric control device 50 through the copper bar, thereby providing a high-voltage transmission channel; and correspondingly, the fuse box 70 may also be connected to the power interface 40 through the copper bar.

In the embodiments of the present disclosure, referring to FIG. 3, which illustrates a cross-sectional view taken along line B-B in FIG. 1, the second connecting seat 701 includes a second bolt 711, a second nut 712 and a second insulating seat 713;
the second bolt 711 is fixed at the bottom of the housing 10, and optionally, the second bolt 711 is welded at the bottom of the housing 10;
the second insulating seat 713 is sleeved on the second bolt 711, with one end of the second insulating seat 713 abuts against the housing 10, and the other end of the second insulating seat 713 forms a second supporting end surface for mounting a fuse copper bar 714 and the connecting copper bar 60;
the second nut 712 is cooperated with the second bolt 711 to fix the fuse copper bar 714 and the connecting copper bar 60 on the second bolt 711.

It can be understood that by disposing the second connecting seat 701 at either end of the fuse box 70, the fuse box 70 can be stably fixed inside the housing 10, and by disposing the second insulating seats 713, the positions of the fuse copper bar 714 and the connecting copper bar 60 can be kept at a distance from the housing 10. Optionally, the heights of the second insulating seat 713 and the first insulating seat 423 are consistent, so that the fuse copper bar 714 and the connecting copper bar 60 are positioned at a preset distance from the housing 10 to ensure a certain insulation effect.

By fixing the fuse copper bar 714 and the connecting copper bar 60 between the second nut 712 and the second supporting end surface, the stability of fixation can be improved, and the disassembly and assembly are facilitated. The structures of the fuse copper bar 714 and the connecting copper bar 60 are designed according to the actual situations, and for example, the fuse copper bar 714 may be plate-shaped, and the connecting copper bar 60 may be bent.

In a further embodiment, the fuse copper bar 714 is provided with a third mounting hole, and the connecting copper bar 60 is provided with a fourth mounting hole corresponding to the third mounting hole;
the sizes of the third mounting hole and the fourth mounting hole are consistent with the cross section of the second bolt 711, and are both smaller than the size of the second supporting end surface.

In order to further improve the insulation effect of the power interface 40, the surface of the fuse copper bar may be coated with a second insulating layer which is a PVC insulating layer.

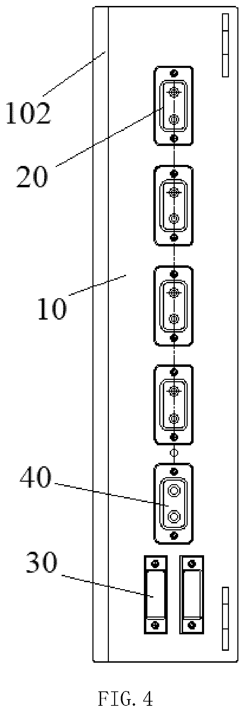

In the embodiments of the present disclosure, referring to FIG. 4, which illustrates a schematic diagram of a connection end surface 101 of a power distribution unit according to an embodiment of the present disclosure, in which there are provided a plurality of electrical appliance interfaces 20 which are uniformly distributed, two plug-in connectors 30 and one power interface 40, and an opening end of the housing 10 is provided with a cover plate 102 having the size consistent with that of the opening end of the housing 10. Optionally, the cover plate 102 may be fixed at the opening end of the housing 10 by means of clamping, so as to facilitate the mounting and disassembly of the cover plate 102, thereby improving the efficiency of maintenance and adjustment of the devices inside the power distribution unit.

In the power distribution unit capable of being multidirectionally matched and mounted of the present disclosure, each of the connection end surfaces 101 is provided with the electrical appliance interface 20, and in actual use, not every electrical appliance interface 20 will be used, i.e., there may be an idle electrical appliance interface 20. Thus, in order to improve the sealing effect of the internal environment of the power distribution unit, optionally, the power distribution unit further includes sealing members which are in one-to-one correspondence with the electrical appliance interfaces 20, and when the electrical appliance interface 20 is in an idle state, the sealing member is inserted into the electrical appliance interface 20, so that the electrical appliance interface 20 remains a sealed state. By disposing the sealing member, the idle electrical appliance interface 20 can be kept in a sealed state to the outside, thereby preventing external impurities (e.g., dust, water vapor, etc.) from entering the power distribution unit and improving the service life of the power distribution unit.

The sealing member may be a sealing plug adapted to the shape of the electrical appliance interface 20, so that the sealing plug can be stably inserted into the electrical appliance interface 20 to reduce the probability of falling off.

In the embodiments of the present disclosure, the power distribution unit further includes a sensor disposed in a connecting line of each of the electrical appliance interfaces 20 to obtain current information or voltage information output by the electrical appliance interface 20. Optionally, the sensor includes a current sensor and/or a voltage sensor.

It can be understood that when the fuse box 70 is not disposed inside the power distribution unit or in some of the power supply lines, in order to improve the working stability of the power distribution unit, the current information or the voltage information in the power supply lines may be obtained by means of the sensors, so as to ensure that the power supply lines are in a normal working state. When the power supply lines are not in the normal working state, the external controller may control the electric control device 50 to be powered off or control the external power source to stop outputting electric energy, so as to ensure the working safety of the power distribution unit.

In the embodiments of the present disclosure, the electric control device 50 includes a relay and/or a Microcontroller Unit (MCU). In the invention each of the electric control devices 50 is connected to one of the electrical appliance interfaces 20. The electric control device 50 is connected to an external power source through the power interface 40 and in communication connection with an external controller through the plug-in connector 30, so as to supply power to the electrical appliance connected to the electrical appliance interface 20 according to a control instruction from the external controller.

In the embodiments of the present disclosure, the power distribution unit further includes a fixing hole 103 disposed at an edge of the housing 10 to fix the power distribution unit inside the electric vehicle. Optionally, there may be four fixing holes 103 respectively disposed in four directions of the housing 10, so that the power distribution unit can be fixed inside the electric vehicle by bolts, thereby ensuring the stability of the power distribution unit inside the electric vehicle.

In the power distribution unit capable of being multidirectionally matched and mounted of the present disclosure, the power distribution unit includes a housing 10 and at least one electric control device 50; the housing 10 includes a plurality of connection end surfaces 101 each provided with at least one electrical appliance interface 20; the housing 10 is further provided with a plug-in connector 30 and a power interface 40; the electric control device 50 is disposed inside the housing 10 and connected to one of the electrical appliance interfaces 20; the electric control device 50 is connected to an external power source through the power interface 40 and is in communication connection with an external controller through the plug-in connector 30, so as to supply power to an electrical appliance connected to the electrical appliance interface 20 according to a control instruction from the external controller. By providing the power distribution unit capable of being multidirectionally matched and mounted, the present disclosure enhances the platformization attribute of the power distribution unit, improves the adaptability of the power distribution unit in different platforms, and saves the design and manufacturing cost.

Based on the power distribution unit capable of being multidirectionally matched and mounted described above, the embodiments of the present disclosure further provide a system, which is a power distribution system, including a power end, a control end, an electrical appliance and the power distribution unit capable of being multidirectionally matched and mounted described above;
the power end is connected to the power distribution unit and configured to supply power to the electrical appliance connected to the power distribution unit;
the control end is connected to the power distribution unit and configured to distribute electric energy to the electrical appliance connected to the power distribution unit.

Based on the power distribution unit capable of being multidirectionally matched and mounted described above, the embodiments of the present disclosure further provide an electric vehicle, which is provided with the power distribution unit capable of being multidirectionally matched and mounted described above.

The electric vehicle may be a pure electric vehicle or a hybrid electric vehicle.

The principles and the implementations of the present disclosure are set forth using specific embodiments, and the descriptions of the above embodiments are only used to help the understanding of the methods and the core ideas of the present disclosure. Meanwhile, those of ordinary skill in the art can make changes in the specific implementations and the application scope according to the concept of the present disclosure. To sum up, the contents of the present disclosure should not be construed as limitations to the present disclosure.

## Claims

1. A power distribution unit capable of being multidirectionally matched and mounted, wherein comprising a housing (10) and a plurality of electric control devices (50);
the housing (10) comprises a plurality of connection end surfaces (101) each provided with at least one electrical appliance interface (20);
the housing (10) is further provided with a plug-in connector (30) and a power interface (40); and
the electric control devices (50) are disposed inside the housing (10) and connected to one of the electrical appliance interfaces (20); each of the plurality of electric control device (50) is connected to an external power source through the power interface (40) and is in communication connection with an external controller through the single plug-in connector (30), so as to supply power to a plurality of electrical appliances connected to the plurality of electrical appliance interfaces (20) respectively according to a control instruction from the external controller.

2. The power distribution unit capable of being multidirectionally matched and mounted according to claim 1, wherein each of the electrical appliance interfaces (20) is connected to at most one of the electrical control devices (50), and when not connected to the electrical control device (50), the electrical appliance interface (20) is connected to the power interface (40).

3. The power distribution unit capable of being multidirectionally matched and mounted according to claim 1, wherein the electrical appliance interface (20) is a high-voltage electrical appliance interface, and the power interface (40) is a high-voltage battery pack interface.

4. The power distribution unit capable of being multidirectionally matched and mounted according to claim 1, wherein the power interface (40) comprises a power copper bar (401) and a first connecting seat (402);
the first connecting seat (402) is fixed on the housing (10);
the power copper bar (401) is connected to the external power source; the power copper bar (401) is connected to the electrical control device (50) or the electrical appliance interface (20) through a connecting copper bar (60); the power copper bar (401) and the connecting copper bar (60) are superimposed and fixed on the first connecting seat (402) and keep a preset distance from the housing (10).

5. The power distribution unit capable of being multidirectionally matched and mounted according to claim 4, wherein the first connecting seat (402) comprises a first bolt (421), a first nut (422) and a first insulating seat (423);
the first bolt (421) is fixed at the bottom of the housing (10);
the first insulating seat (423) is sleeved on the first bolt (421), with one end of the first insulating seat (423) abuts against the housing (10), and the other end of the first insulating seat (423) forms a first supporting end surface for mounting the power copper bar (401) and the connecting copper bar (60); and
the first nut (422) is cooperated with the first bolt (421) configured to fix the power copper bar (401) and the connecting copper bar (60) on the first bolt (421).

6. The power distribution unit capable of being multidirectionally matched and mounted according to claim 5, wherein the power copper bar (401) is provided with a first mounting hole, and the connecting copper bar (60) is provided with a second mounting hole, and the first mounting hole corresponds to the second mounting hole;
the sizes of the first mounting hole and the second mounting hole are consistent with the cross section of the first bolt (421), and are both smaller than the size of the first supporting end surface.

7. The power distribution unit capable of being multidirectionally matched and mounted according to claim 4, wherein the surfaces of the power copper bar (401) and the connecting copper bar (60) are coated with a first insulating layer.

8. The power distribution unit capable of being multidirectionally matched and mounted according to claim 1, wherein the power distribution unit further comprises a fuse box (70), which is fixed on the housing (10) through a second connecting seat (701);
a power inlet end of the fuse box (70) is connected to the power interface (40) through a connecting copper bar (60), and a power outlet end of the fuse box (70) is connected to the electrical control device (50) or the electrical appliance interface (20).

9. The power distribution unit capable of being multidirectionally matched and mounted according to claim 8, wherein the second connecting seat (701) comprises a second bolt (711), a second nut (712) and a second insulating seat (713);
the second bolt (711) is fixed at the bottom of the housing (10);
the second insulating seat (713) is sleeved on the second bolt (711), with one end of the second insulating seat (713) abuts against the housing (10), and the other end of the second insulating seat (713) forms a second supporting end surface for mounting a fuse copper bar (714) and the connecting copper bar (60); and
the second nut (712) is cooperated with the second bolt (711) configured to fix the fuse copper (714) bar and the connecting copper bar (60) on the second bolt (711).

10. The power distribution unit capable of being multidirectionally matched and mounted according to claim 9, wherein the fuse copper bar (714) is provided with a third mounting hole, and the connecting copper bar (60) is provided with a fourth mounting hole corresponding to the third mounting hole; and
the sizes of the third mounting hole and the fourth mounting hole are consistent with the cross section of the second bolt (711), and are both smaller than the size of the second supporting end surface.

11. The power distribution unit capable of being multidirectionally matched and mounted according to claim 9, wherein the surface of the fuse copper bar (714) is coated with a second insulating layer; further
the second insulating layer is a PVC insulating layer.

12. The power distribution unit capable of being multidirectionally matched and mounted according to claim 1, wherein an opening end of the housing (10) is provided with a cover plate (102) having the size consistent with that of the opening end of the housing (10).

13. The power distribution unit capable of being multidirectionally matched and mounted according to claim 1, whereinthe power distribution unit further comprises sealing members which are in one-to-one correspondence with the electrical appliance interfaces, and when the electrical appliance interface (20) is in an idle state, the sealing member is inserted into the electrical appliance interface (20), so that the electrical appliance interface (20) remains a sealed state.

14. A system, which is a power distribution system, comprising a power end, a control end, an electrical appliance and the power distribution unit capable of being multidirectionally matched and mounted according to any of claims 1 to 12;
the power end is connected to the power distribution unit and configured to supply power to the electrical appliance connected to the power distribution unit; and
the control end is connected to the power distribution unit and configured to distribute electric energy to the electrical appliance connected to the power distribution unit.

15. An electric vehicle, comprising the power distribution unit capable of being multidirectionally matched and mounted according to any of claims 1 to 13.

## Patentansprüche

1. Energieverteilungseinheit, die multidirektional angepasst und montiert werden kann, wobei sie ein Gehäuse (10) und eine Vielzahl von elektrischen Steuergeräten (50) aufweist;
das Gehäuse (10) mehrere Anschlussendflächen (101) aufweist, die jeweils mit mindestens einer Schnittstelle (20) für elektrische Geräte versehen sind;
das Gehäuse (10) ferner mit einem Steckverbinder (30) und einer Stromschnittstelle (40) versehen ist; und
die elektrischen Steuergeräte (50) innerhalb des Gehäuses (10) angeordnet und mit einer der Schnittstellen (20) für elektrische Geräte verbunden sind; jede der mehreren elektrischen Steuergeräte (50) über die Stromschnittstelle (40) mit einer externen Stromquelle verbunden ist und über den einzigen Steckverbinder (30) in Kommunikationsverbindung mit einer externen Steuereinheit steht, um mehrere elektrische Geräte, die jeweils mit den mehreren Schnittstellen (20) für elektrische Geräte verbunden sind, gemäß einer Steueranweisung von der externen Steuereinheit mit Strom zu versorgen.

2. Energieverteilungseinheit, die multidirektional angepasst und montiert werden kann, gemäß Anspruch 1, wobei jede der Schnittstellen (20) für elektrische Geräte mit höchstens einer der elektrischen Steuergeräte (50) verbunden ist und, wenn sie nicht mit dem elektrischen Steuergerät (50) verbunden ist, die Schnittstelle (20) für elektrische Geräte mit der Stromschnittstelle (40) verbunden ist.

3. Energieverteilungseinheit, die multidirektional angepasst und montiert werden kann, gemäß Anspruch 1, wobei die Schnittstelle (20) für elektrische Geräte eine Hochspannungsschnittstelle für elektrische Geräte ist und die Stromschnittstelle (40) eine Schnittstelle eines Hochspannungs-Batteriepacks ist.

4. Energieverteilungseinheit, die multidirektional angepasst und montiert werden kann, gemäß Anspruch 1, wobei die Stromschnittstelle (40) eine Stromkupferleiste (401) und einen ersten Verbindungssitz (402) aufweist;
der erste Verbindungssitz (402) am Gehäuse (10) befestigt ist;
die Stromkupferleiste (401) mit der externen Stromquelle verbunden ist; die Stromkupferleiste (401) über eine Verbindungskupferleiste (60) mit dem elektrischen Steuergerät (50) oder der Schnittstelle (20) für elektrische Geräte verbunden ist; die Stromkupferleiste (401) und die Verbindungskupferleiste (60) übereinander angeordnet und am ersten Verbindungssitz (402) befestigt sind und einen voreingestellten Abstand zum Gehäuse (10) einhalten.

5. Energieverteilungseinheit, die multidirektional angepasst und montiert werden kann, gemäß Anspruch 4, wobei der erste Verbindungssitz (402) einen ersten Bolzen (421), eine erste Mutter (422) und einen ersten Isoliersitz (423) aufweist;
der erste Bolzen (421) am Boden des Gehäuses (10) befestigt ist;
der erste Isoliersitz (423) auf dem ersten Bolzen (421) aufgesteckt ist, wobei ein Ende des ersten Isoliersitzes (423) am Gehäuse (10) anliegt und das andere Ende des ersten Isoliersitzes (423) eine erste Stützendfläche zum Befestigen der Stromkupferleiste (401) und der Verbindungskupferleiste (60) bildet; und
die erste Mutter (422) mit dem ersten Bolzen (421) zusammenwirkt, die so konfiguriert ist, dass sie die Stromkupferleiste (401) und die Verbindungskupferleiste (60) an dem ersten Bolzen (421) befestigt.

6. Energieverteilungseinheit, die multidirektional angepasst und montiert werden kann, gemäß Anspruch 5, wobei die Stromkupferleiste (401) mit einem ersten Befestigungsloch versehen ist und die Verbindungskupferleiste (60) mit einem zweiten Befestigungsloch versehen ist und das erste Befestigungsloch dem zweiten Befestigungsloch entspricht;
die Größen des ersten Befestigungslochs und des zweiten Befestigungslochs mit dem Querschnitt des ersten Bolzens (421) übereinstimmen und beide kleiner sind als die Größe der ersten Stützendfläche.

7. Energieverteilungseinheit, die multidirektional angepasst und montiert werden kann, gemäß Anspruch 4, wobei die Oberflächen der Stromkupferleiste (401) und der Verbindungskupferleiste (60) mit einer ersten Isolierschicht beschichtet sind.

8. Energieverteilungseinheit, die multidirektional angepasst und montiert werden kann, gemäß Anspruch 1, wobei die Energieverteilungseinheit des Weiteren einen Sicherungskasten (70), der über einen zweiten Verbindungssitz (701) am Gehäuse (10) befestigt ist, aufweist;
wobei ein Strom-Eingangsende des Sicherungskastens (70) über eine Verbindungskupferleiste (60) mit der Stromschnittstelle (40) verbunden ist und ein Strom-Ausgangsende des Sicherungskastens (70) mit dem elektrischen Steuergerät (50) oder der Schnittstelle (20) für elektrische Geräte verbunden ist.

9. Energieverteilungseinheit, die multidirektional angepasst und montiert werden kann, gemäß Anspruch 8, wobei der zweite Verbindungssitz (701) einen zweiten Bolzen (711), eine zweite Mutter (712) und einen zweiten Isoliersitz (713) aufweist;
der zweite Bolzen (711) am Boden des Gehäuses (10) befestigt ist;
der zweite Isoliersitz (713) auf den zweiten Bolzen (711) aufgesteckt ist, wobei ein Ende des zweiten Isoliersitzes (713) am Gehäuse (10) anliegt und das andere Ende des zweiten Isoliersitzes (713) eine zweite Stützendfläche zum Befestigen einer Sicherungskupferleiste (714) und der Verbindungskupferleiste (60) bildet; und
die zweite Mutter (712) mit dem zweiten Bolzen (711) zusammenwirkt, die so konfiguriert ist, dass sie die Sicherungskupferleiste (714) und die Verbindungskupferleiste (60) auf dem zweiten Bolzen (711) befestigt.

10. Energieverteilungseinheit, die multidirektional angepasst und montiert werden kann, gemäß Anspruch 9, wobei die Sicherungskupferleiste (714) mit einem dritten Befestigungsloch versehen ist und die Verbindungskupferleiste (60) mit einem vierten Befestigungsloch versehen ist, das dem dritten Befestigungsloch entspricht; und
die Größen des dritten Befestigungslochs und des vierten Befestigungslochs mit dem Querschnitt des zweiten Bolzens (711) übereinstimmen und beide kleiner sind als die Größe der zweiten Stützendfläche.

11. Energieverteilungseinheit, die multidirektional angepasst und montiert werden kann, gemäß Anspruch 9, wobei die Oberfläche der Sicherungskupferleiste (714) mit einer zweiten Isolierschicht beschichtet ist; des Weiteren
die zweite Isolierschicht eine PVC-Isolierschicht ist.

12. Energieverteilungseinheit, die multidirektional angepasst und montiert werden kann, gemäß Anspruch 1, wobei ein Öffnungsende des Gehäuses (10) mit einer Abdeckplatte (102) versehen ist, deren Größe mit der des Öffnungsendes des Gehäuses (10) übereinstimmt.

13. Energieverteilungseinheit, die multidirektional angepasst und montiert werden kann, gemäß Anspruch 1, wobei die Energieverteilungseinheit des Weiteren Dichtungselemente aufweist, die in einer Eins-zu-Eins-Entsprechung zu den Schnittstellen für elektrische Geräte stehen, und wenn sich die Schnittstelle (20) für elektrische Geräte in einem Ruhezustand befindet, das Dichtungselement in die Schnittstelle (20) für elektrische Geräte eingeführt ist, so dass die Schnittstelle (20) für elektrische Geräte in einem abgedichteten Zustand bleibt.

14. System, das ein Energieverteilungssystem ist, aufweisend ein Stromversorgungsende, ein Steuerende, ein elektrisches Gerät und die Energieverteilungseinheit, die multidirektional angepasst und montiert werden kann, gemäß einem der Ansprüche 1 bis 12;
wobei das Stromversorgungsende mit der Energieverteilungseinheit verbunden und so konfiguriert ist, dass es das mit der Energieverteilungseinheit verbundene elektrische Gerät mit Strom versorgt; und
das Steuerende mit der Energieverteilungseinheit verbunden und so konfiguriert ist, dass es elektrische Energie an das mit der Energieverteilungseinheit verbundene elektrische Gerät verteilt.

15. Elektrofahrzeug, aufweisend die Energieverteilungseinheit, die multidirektional angepasst und montiert werden kann, gemäß einem der Ansprüche 1 bis 13.

## Revendications

1. Unité de distribution d'énergie pouvant être adaptée et montée de manière multidirectionnelle, comprenant un boîtier (10) et une pluralité de dispositifs de commande électriques (50);
le boîtier (10) comportant plusieurs faces d'extrémité de raccordement (101) qui sont chacune pourvues d'au moins une interface (20) pour appareils électriques;
le boîtier (10) est en outre muni d'un connecteur enfichable (30) et d'une interface électrique (40); et
les dispositifs de commande électriques (50) sont disposés à l'intérieur du boîtier (10) et sont connectés à l'une des interfaces (20) pour appareils électriques; chacun des multiples dispositifs de commande électriques (50) est connecté à une source d'alimentation externe via l'interface électrique (40) et est en communication avec une unité de commande externe via le connecteur enfichable (30) afin d'alimenter en électricité plusieurs appareils électriques, chacun étant connecté aux multiples interfaces (20) pour appareils électriques, conformément à une instruction de commande provenant de l'unité de commande externe.

2. Unité de distribution d'énergie pouvant être adaptée et montée de manière multidirectionnelle, selon la revendication 1, dans laquelle chacune des interfaces (20) pour appareils électriques est connectée à au plus un des dispositifs de commande électriques (50) et, lorsqu'elle n'est pas connectée au dispositif de commande électrique (50), l'interface (20) pour appareils électriques est connectée à l'interface électrique (40).

3. Unité de distribution d'énergie pouvant être adaptée et montée de manière multidirectionnelle, selon la revendication 1, dans laquelle l'interface (20) pour appareils électriques est une interface haute tension pour appareils électriques et l'interface électrique (40) est une interface d'un bloc-batterie haute tension.

4. Unité de distribution d'énergie pouvant être adaptée et montée de manière multidirectionnelle, selon la revendication 1, dans laquelle l'interface (40) comprend une barre de cuivre électrique (401) et un premier siège de connexion (402) ;
le premier siège de connexion (402) est fixé au boîtier (10);
la barre de cuivre électrique (401) est connectée à la source électrique externe; la barre de cuivre électrique (401) est connectée à le dispositif de commande électrique (50) ou à l'interface (20) pour appareils électriques via une barre de connexion en cuivre (60); la barre de cuivre électrique (401) et la barre de connexion en cuivre (60) sont disposées l'une au-dessus de l'autre et fixées au premier siège de connexion (402) et maintiennent une distance prédéfinie par rapport au boîtier (10).

5. Unité de distribution d'énergie pouvant être adaptée et montée de manière multidirectionnelle, selon la revendication 4, dans laquelle le premier siège de connexion (402) comprend un premier boulon (421), un premier écrou (422) et un premier siège isolant (423);
le premier boulon (421) est fixé au fond du boîtier (10);
le premier siège isolant (423) est enfiché sur le premier boulon (421), une extrémité du premier siège isolant (423) repose contre le boîtier (10) et l'autre extrémité du premier siège isolant (423) formant une première surface d'appui pour la fixation de la barre de cuivre électrique (401) et de la barre de connexion en cuivre (60); et
la première écrou (422) coopère avec le premier boulon (421), qui est configuré pour fixer la barre de cuivre électrique (401) et la barre de connexion en cuivre (60) au premier boulon (421).

6. Unité de distribution d'énergie pouvant être adaptée et montée de manière multidirectionnelle, selon la revendication 5, dans laquelle la barre de cuivre électrique (401) est pourvue d'un premier trou de fixation et la barre de connexion en cuivre (60) est pourvue d'un deuxième trou de fixation, et le premier trou de fixation correspond au deuxième trou de fixation;
les dimensions du premier trou de fixation et du deuxième trou de fixation correspondent à la section transversale du premier boulon (421) et sont toutes deux inférieures à la dimension de la première surface d'appui.

7. Unité de distribution d'énergie pouvant être adaptée et montée de manière multidirectionnelle selon la revendication 4, dans laquelle les surfaces de la barre de cuivre électrique (401) et de la barre de connexion en cuivre (60) sont recouvertes d'une première couche isolante.

8. Unité de distribution d'énergie pouvant être adaptée et montée de manière multidirectionnelle, selon la revendication 1, dans laquelle l'unité de distribution d'énergie comprend en outre un boîtier de fusibles (70) fixé au boîtier (10) par un deuxième siège de connexion (701);
une extrémité d'entrée de courant du boîtier à fusibles (70) étant connectée à l'interface électrique (40) via une barre de connexion en cuivre (60) et une extrémité de sortie de courant du boîtier à fusibles (70) étant connectée au dispositif de commande électrique (50) ou à l'interface (20) pour appareils électriques.

9. Unité de distribution d'énergie pouvant être adaptée et montée de manière multidirectionnelle, selon la revendication 8, dans laquelle le deuxième siège de connexion (701) comprend un deuxième boulon (711), un deuxième écrou (712) et un deuxième siège isolant (713);
le deuxième boulon (711) est fixé au fond du boîtier (10);
le deuxième siège isolant (713) est enfiché sur le deuxième boulon (711), une extrémité du deuxième siège isolant (713) reposant contre le boîtier (10) et l'autre extrémité du deuxième siège isolant (713) formant une deuxième surface d'appui pour la fixation d'une barre de cuivre de sécurité (714) et la barre de connexion en cuivre (60) ; et
le deuxième écrou (712) coopérant avec le deuxième boulon (711), qui est configuré de manière à fixer la barre de cuivre de sécurité (714) et la barre de connexion en cuivre (60) sur le deuxième boulon (711).

10. Unité de distribution d'énergie pouvant être adaptée et montée de manière multidirectionnelle, selon la revendication 9, dans laquelle la barre de cuivre de sécurité (714) est pourvue d'un troisième trou de fixation et la barre de connexion en cuivre (60) est pourvue d'un quatrième trou de fixation correspondant au troisième trou de fixation; et
les dimensions du troisième trou de fixation et du quatrième trou de fixation correspondent à la section transversale du deuxième boulon (711) et sont toutes deux inférieures à la dimension de la deuxième surface d'appui.

11. Unité de distribution d'énergie pouvant être adaptée et montée de manière multidirectionnelle, selon la revendication 9, dans laquelle la surface de la barre de cuivre de sécurité (714) est recouverte d'une deuxième couche isolante; en outre
la deuxième couche isolante est une couche isolante en PVC.

12. Unité de distribution d'énergie pouvant être adaptée et montée de manière multidirectionnelle, selon la revendication 1, dans laquelle une extrémité d'ouverture du boîtier (10) est pourvue d'une plaque de recouvrement (102) dont la taille correspond à celle de l'extrémité d'ouverture du boîtier (10).

13. Unité de distribution d'énergie pouvant être adaptée et montée de manière multidirectionnelle, selon la revendication 1, dans laquelle l'unité de distribution d'énergie comprend en outre des éléments d'étanchéité qui correspondent un à un aux interfaces pour appareils électriques, et lorsque l'interface (20) pour appareils électriques est à l'état de repos, l'élément d'étanchéité est inséré dans l'interface (20) pour appareils électriques, de sorte que l'interface (20) pour appareils électriques reste à l'état étanche.

14. Système qui est un système de distribution d'énergie, comprenant une extrémité d'alimentation électrique, une extrémité de commande, un appareil électrique et l'unité de distribution d'énergie pouvant être adaptée et montée de manière multidirectionnelle, selon l'une des revendications 1 à 12;
dans lequel l'extrémité d'alimentation électrique est connectée à l'unité de distribution d'énergie et est configurée pour alimenter en électricité l'appareil électrique connecté à l'unité de distribution d'énergie; et
l'extrémité de commande étant connectée à l'unité de distribution d'énergie et configurée pour distribuer de l'énergie électrique à l'appareil électrique connecté à l'unité de distribution d'énergie.

15. Véhicule électrique comprenant l'unité de distribution d'énergie pouvant être adaptée et montée de manière multidirectionnelle, selon à l'une des revendications 1 à 13.
